# EUROPEAN PATENT APPLICATION

(11) **EP 3 208 715 A2**
(43) Date of publication of application: **23.08.2017**
(21) Application number: 17156594.8
(22) Date of filing: 17.02.2017
(51) Int. Cl.: G06F 11/10

(54) **METHOD AND APPARATUS FOR PERFORMING DATA SCRUBBING MANAGEMENT IN STORAGE SYSTEM**

(30) Priority: 18.02.2016 TW 105104706
(71) Applicant: Synology Incorporated, Taipei 103 (TW)
(72) Inventor: Wang, Yu-Ting, 220 New Taipei City (TW); Chang, Cheng-Yu, 220 New Taipei City (TW)
(74) Representative: Becker Kurig Straus

(57) **Abstract**

A method for performing data scrubbing management in a storage system and an associated apparatus are provided. The method includes: detecting whether a system event within at least one predetermined system event occurs to generate a detection result; and selectively triggering a data scrubbing operation in the storage system according to the detection result. Each predetermined system event within the predetermined system event is not generated via scheduling settings, is not generated via prior scheduling settings corresponding to a fixed period, and the scrubbing operation is a non-scheduling event triggered scrubbing operation.

## Description

The present invention relates to efficiency management of a data storage system, and more particularly, to a method and apparatus for performing data scrubbing management in a storage system.

Data scrubbing is an error correction technique for fixing data errors. A conventional storage system may perform data scrubbing to improve the correctness of data. Some problems may be encountered in related art data scrubbing techniques, however. For example, an administrator may manually perform data scrubbing, or perform data scrubbing via scheduling settings corresponding to a fixed period. Taking a redundant array of independent disks (RAID) as an example of the conventional storage system, the conventional data scrubbing management scheme may read data of each hard drive in the RAID in order to detect whether the data is corrupted or inconsistent. The total time required for performing data scrubbing depends on the size and characteristics of the storage system, and it generally lasts for several hours. In addition, performing data scrubbing may lower the system service efficiency of the conventional storage system. Hence, the conventional data scrubbing management may severely deteriorate the service provided by the storage system.

It may be difficult for the administrator to define an appropriate duration for performing data scrubbing to maintain both the data correctness and the system service efficiency. Some related arts suggest that a personal server system should undergo a thorough data scrubbing once per month, and a large-sized server system should undergo a thorough data scrubbing once per three months, but there is little theoretical basis for these claims. Further, since the system state may change at any time, it will be difficult for the administrator to determine whether these related art methods are suitable for specific system states. More particularly, these related art methods may introduce other issues, such as the following: a relatively long scheduling period makes the conventional storage system unable to immediately reflect the data correctness; and a relatively short scheduling period may waste the system resources of the storage system, thus lowering the system service efficiency of the storage system.

In view of the above, there is a need for a novel method and related scheme to solve the aforementioned issues without introducing undesired side effects.

This in mind, the application aims at providing a method and associated apparatus in order to solve the abovementioned problems.

This is achieved by a method for performing data scrubbing management in a storage system and an associated device according to claims 1 and 13, respectively. The dependent claims pertain to corresponding further developments and improvements.

As will be seen more clearly from the detailed description following below, the claimed method includes: detecting whether a system event within at least one predetermined system event occurs in order to generate a detection result; and selectively triggering a data scrubbing operation in the storage system according to the detection result.

In addition, the claimed apparatus includes at least a portion of the storage system, and includes at least one storage device and a control circuit. The storage device is positioned in the storage system, and is arranged to store information. The control circuit is positioned in the storage system and coupled to the storage device. Further, the control circuit is arranged to control operations of the storage system, and detect whether a system event of at least one predetermined system event occurs in order to generate a detection result, in which the control circuit selectively triggers a data scrubbing operation of the storage device in the storage system according to the detection result.

In the following, the invention is further illustrated by way of example, taking reference to the accompanying drawings. Thereof:
- Fig. 1: is a diagram illustrating a storage system according to an embodiment of the present invention;
- Fig. 2: is a diagram illustrating a storage system according to another embodiment of the present invention;
- Fig. 3: is a flowchart illustrating a method for performing data scrubbing management in a storage system;
- Fig. 4: shows a workflow related to the method shown in Fig. 3 according to an embodiment of the present invention; and
- Fig. 5: shows a workflow related to the method shown in Fig. 3 according to another embodiment of the present invention.

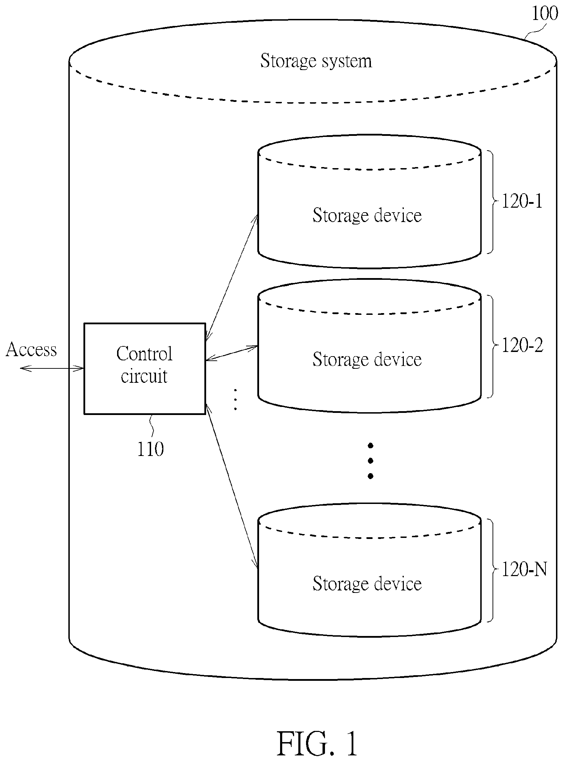

Fig. 1 is a diagram illustrating a storage system 100 according to an embodiment of the present invention. The storage system 100 may include a control circuit 110, and may include at least one storage device (e.g. one or more storage devices), such as N storage devices {120-1, 120-2, ..., 120-N}. The control circuit 110 may be coupled to the aforementioned storage devices such as the N storage devices, in which the symbol "N" may represent a positive integer. For example, when N = 1, the N storage devices include one storage device 120-1. In another example, when N = 2, the plurality of storage devices include two storage devices 120-1 and 120-2. In yet another example, when N > 2, the plurality of storage devices include three or more storage devices, such as the storage device 120-1, 120-2, ..., 120-N. A storage device 120-n within the N storage devices {120-1, 120-2, ..., 120-N} (in which "n" is a positive integer between [1, N]) may be a solid state drive (SSD) or hard disk drive (HDD).

According to this embodiment, the control circuit 110 is arranged to control operations of the storage system 100, and each storage device within the N storage devices {120-1, 120-2, ..., 120-N} may be arranged to store information. Furthermore, any storage device 120-n within the N storage devices {120-1, 120-2, ..., 120-N} may represent one physical storage device, or one logic storage device composed of multiple physical storage devices. More particularly, under the situation where the storage device 120-n within the N storage devices {120-1, 120-2, ..., 120-N} represents a logic storage device composed of a plurality of physical storage devices, each storage device within the N storage devices {120-1, 120-2, ..., 120-N} may be a redundant array of independent disks (RAID). For example, the storage device 120-1 may be a RAID composed of a plurality of SSDs to implement as a cache. In another example, a storage device within the storage devices {120-2, ..., 120-N} may be a RAID composed of a plurality of HDDs, and is used to store data, such as the data, files and user data in a file system. In addition, the control circuit 110 may be implemented as a processing circuit for executing a program module. For example, the program module may include a firmware code. This is merely for illustrative purposes, and is not meant to be a limitation of the present invention. In another example, the program module may include a software code.

In some embodiments, the apparatus for performing data scrubbing management in the storage system 100 may include at least a portion (e.g. part or all) of the storage system 100. For example, the apparatus may include a portion of the storage system 100, such as the control circuit 110. In another example, the apparatus may include a portion of the storage system 100, such as the control circuit 110 and one or more storage devices within the N storage devices {120-1, 120-2, ..., 120-N}. In yet another example, the apparatus may include the entire storage system 100. Examples of the storage system 100 may include, but are not limited to, a server and a network-attached storage (NAS).

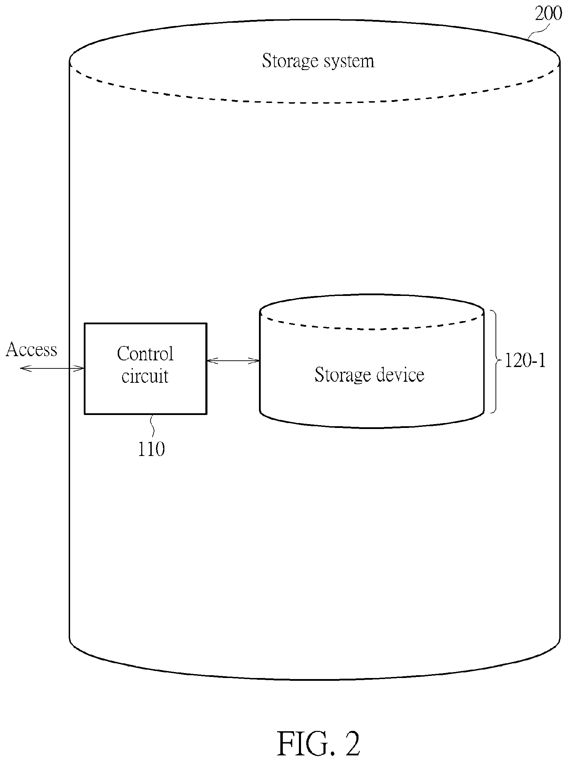

Fig. 2 is a diagram illustrating a storage system 200 according to another embodiment of the present invention. Compared with the embodiment shown in Fig. 1, in the embodiment of Fig. 2, the at least one storage device may only include the storage device 120-1 shown in Fig. 1, in which the control circuit 110 is coupled to the storage device 120-1. According to this embodiment, the storage device 120-1 may represent a physical storage device (e.g. the physical storage device mentioned above), or a logic storage device composed of a plurality of physical storage devices (e.g. the logic storage device mentioned above). Some features in this embodiment which are similar to those in the previous embodiments/modifications are omitted here for brevity.

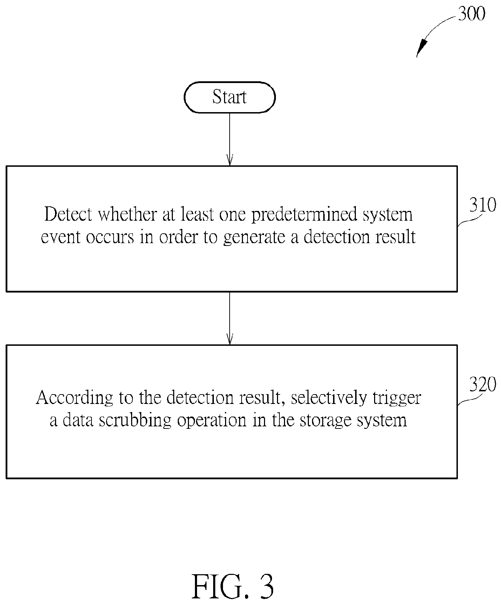

Fig. 3 is a flowchart illustrating a method 300 for performing data scrubbing management in a storage system. The method 300 may be applied to the storage system 100 shown in Fig. 1 or the storage system 200 shown in Fig. 2, and more particularly, to the aforementioned control circuit 110. The method 300 is described as follows.

In Step 310, the control circuit 110 may detect whether at least one predetermined system event occurs in order to generate a detection result. In an example, each predetermined system event is not generated via scheduling settings. More particularly, each predetermined system event is not generated via prior scheduling settings corresponding to fixed periods. That is, each predetermined system event may not be generated periodically with fixed time interval.

In Step 320, according to the detection result, the control circuit 110 may selectively trigger a data scrubbing operation in the storage system (e.g. the data scrubbing operation of any storage device shown in the embodiments of Fig. 1 and Fig. 2). For example, under the situation where each predetermined system event mentioned in Step 310 is not generated via scheduling settings, the data scrubbing operation mentioned in Step 320 is a non-scheduling event triggered scrubbing operation. That is, the triggering of the scrubbing operation is irrelevant to the scheduled events.

In an implementation, examples of the predetermined system event mentioned in Step 310 may include (but are not limited to): abnormal shutdown, abnormal S.M.A.R.T (self-monitoring, analysis and reporting technology) state of a physical storage device (e.g. HDD or SSD), uncorrectable errors (UNCs) of a physical storage device, the retry state during accessing data, data read/write command failure, and file system errors. Abnormal power loss of the storage system may cause the abnormal shutdown of an electronic device. Abnormal slots for coupling to physical storage devices may cause the retry state.

Note that the predetermined system event mentioned in Step 310 may represent one or more predetermined system events. For example, according to some embodiments, the predetermined system event mentioned in Step 310 may include a plurality of predetermined system events, and the system event mentioned in Step 310 is one of the plurality of predetermined system events. Furthermore, according to these embodiments, in Step 310, the control circuit 110 may detect whether another of the plurality of predetermined system events occurs to generate the detection result. In this way, one of the plurality of predetermined system events may be used to trigger another predetermined system event in the data scrubbing operation mentioned in Step 320. For example, the aforementioned predetermined system event or the other predetermined system event within the plurality of predetermined system events may trigger the data scrubbing operation mentioned in Step 320.

According to some embodiments, in Step 310, the control circuit 110 may detect whether an accumulated number of times the system event occurs reaches an accumulated times threshold to generate the detection result. For example, under the situation where the predetermined system event mentioned in Step 310 includes the plurality of predetermined system events, the system event mentioned in Step 310 will be the predetermined system event within the plurality of predetermined system events, and the accumulated times threshold will correspond to the system event. Furthermore, in Step 310, the control circuit 110 may detect whether the other predetermined system event within the plurality of predetermined system events occurs or not in order to generate the detection result. More particularly, in Step 310, the control circuit 110 may detect whether an accumulated amount of times the other predetermined system event within the plurality of predetermined system events occurs reaches another accumulated times threshold to generate the detection result, in which the other accumulated times threshold corresponds to the other predetermined system event within the plurality of predetermined system events. In this way, the control circuit 110 may refer to different accumulated times thresholds to determine whether to trigger the data scrubbing operation mentioned in Step 310 for a different predetermined system event within the plurality of predetermined system events (i.e. a plurality of accumulated times thresholds may not all be identical to each other). Hence, a different situation where the accumulated amount of times of the predetermined system event within the plurality of predetermined system events reaches the accumulated times threshold, and/or the accumulated amount of times of the other predetermined system event within the plurality of predetermined system events reaches the other accumulated times threshold, may trigger the data scrubbing operation mentioned in Step 320. These independent accumulated times threshold may be different default values, but this is merely for illustrative purposes. According to some embodiments, these accumulated times threshold may be default values which are not the same as each other. According to some embodiments, the control circuit 110 may provide a user interface, to allow a user of the storage system (e.g. the administrator of the storage system) to set the accumulated times threshold. For example, the other accumulated times threshold may be one default value. According to some embodiments, the control circuit 110 may provide the user interface to allow the user to set the accumulated times threshold and the other accumulated times threshold. In addition, the user interface may be used for setting at least one predetermined system event.

According to some embodiments, the control circuit 110 may determine at least one target data location to perform the data scrubbing operation, in which the target data location indicates the data processing range of the data scrubbing operation mentioned in Step 320. For example, during determining the target data location to perform the data scrubbing operation, the control circuit 110 may identify a plurality of file locations in the storage system, in which the plurality of file locations correspond to a plurality of files, and the target data location includes the plurality of file locations. Further, during determining the target data location to perform the data scrubbing operation, the control circuit 110 may perform the data scrubbing operation mentioned in Step 320 upon the plurality of file locations in the storage system, rather than performing the data scrubbing operation upon the entire storage system. In addition, during identifying the plurality of file locations in the storage system, the control circuit 110 may search any location that has a file in the storage system to be one of the plurality of file locations. According to some embodiments, during determining the target data location to perform the data scrubbing operation, the control circuit 110 may identify at least one designated region in the storage system, in which the storage space of the designated region is smaller than that of the storage system, and the target data location includes the designated region. Further, during determining the target data location to perform the data scrubbing operation, the control circuit 110 may perform the data scrubbing operation mentioned in Step 320 upon the designated region in the storage system, rather than performing the data scrubbing operation upon the entire storage system. For example, the control circuit 110 may provide a user interface (e.g. the aforementioned user interface), to allow the user to set the designated region.

According to some embodiments, the control circuit 110 may detect the accumulated data amount of data processed by the data scrubbing operation mentioned in Step 320 to generate another detection result. Further, according to the other detection result, the control circuit 110 may selectively stop the data scrubbing operation. For example, when the other detection result indicates that the accumulated data amount of data processed by the data scrubbing operation mentioned in Step 320 reaches a predetermined accumulated data amount threshold, the control circuit 110 may stop the data scrubbing operation mentioned in Step 320. In addition, when the data scrubbing operation is stopped, the control circuit 110 may record the last data location of the data scrubbing operation, in which the last data location represents the location of the last processed data of the data scrubbing operation. When another data scrubbing operation in the storage system is triggered, the control circuit 110 may utilize the next location of the last data location as the initial location of the other data scrubbing operation. According to some embodiments, the data scrubbing operation may be paused, rather than being stopped. For example, when the other detection result indicates that the accumulated data amount of the data processed by the data scrubbing operation mentioned in Step 320 reaches a predetermined accumulated data amount threshold, the control circuit 110 may pause the data scrubbing operation mentioned in Step 320. In addition, when pausing the data scrubbing operation, the control circuit 110 may record the last data location of the paused data scrubbing operation, in which the last data location represents the location of the data last processed by the data scrubbing operation. When the data scrubbing operation is re-triggered, the control circuit 110 may utilize the next position of the last data location as the initial position.

According to some embodiments, in addition to determining the target data location (e.g. one or more target data locations) to perform the data scrubbing operation, the control circuit 110 may detect the accumulated data amount of the data processed by the data scrubbing operation mentioned in Step 320 to generate the other detection result. Further, according to the other detection result, the control circuit 110 may selectively stop the data scrubbing operation. According to some embodiments, the control circuit 110 may automatically detect the busy levels of the system resources of the storage system, and refer to the busy levels to dynamically adjust the resource usage level of the data scrubbing operation.

According to some embodiments, as long as the implementations of the present invention are not interfered with, the control circuit 110 may include all kinds of combinations of the functions of various operations described in the above embodiments, such as the functions of at least one portion of the various operations. According to these embodiments, a method (e.g. the method 300) and apparatus of the present invention may allow the administrator to set the storage system in order to enable/disable any of the aforementioned abilities through the configurations of various control factors, in which the control circuit 110 may provide a plurality of configuration interfaces (e.g. a plurality of windows or tabs) in the user interface, such as a first configuration interface, a second configuration interface, a third configuration interface and a fourth configuration interface, for the administrator to set the configurations of the aforementioned control factors.

Taking the first configuration interface as example, the method (e.g. the method 300) and apparatus of the present invention may allow the administrator to set the storage system via the first configuration interface in order to utilize at least two subtypes of control factors to control the timing of enabling data scrubbing, in which the control factors of the two subtypes may include: "event triggering", which involves determining which event can be used as the event for triggering data scrubbing (e.g. the predetermined system event mentioned in Step 310); and "time scheduling" which involves determining the time range of executing the schedule. Regarding the first subtype "event trigger", examples of the predetermined system event mentioned in Step 310 have been described in the embodiment of Fig. 3, and are omitted here for brevity. The user (e.g. the administrator) of the storage system may set conditions of triggering an event. For example, when the read command of the aforementioned data fails 5 times, the data scrubbing operation mentioned in Step 320 will be immediately enabled, or the data scrubbing operation mentioned in Step 320 will be immediately enabled right after the file system error occurs. The control circuit 110 may immediately check whether there is an error in data right after the event is triggered in order to utilize the data scrubbing mentioned in the method 300 shown in Fig. 3 to ensure the correctness of the data. Further, regarding the second subtype "time schedule", the administrator may utilize a non-traditional schedule control scheme (which is different from the conventional data scrubbing management scheme mentioned in the related art) to execute data scrubbing. More particularly, the administrator may set basic time schedules (e.g. the aforementioned scheduling settings corresponding to a fixed period), and the administrator may also set the storage system to allow for additional data scrubbings. For these additional data scrubbings, the administrator may limit the duration of executing data scrubbing in order to avoid (as much as possible) a situation where the storage system executes data scrubbing missions at busy time. For example, the administrator may arrange the data scrubbing to be performed only during a leisure time (e.g. 2:00AM - 4:00AM) on some days per month. Note that the method 300 and apparatus of the present invention allow the administrator to set the storage system with the second configuration interface to control the data range for performing data scrubbing. In general, each time the conventional data scrubbing management scheme performs a checking operation, the data scrubbing is performed upon the entire conventional storage system. Compared with the above method, the method and apparatus of the present invention may allow the administrator to arbitrarily designate the data range to undergo data scrubbing, in which the examples of the data range may include (but are not limited to): the entire storage system; one or more specific locations where files exist in RAIDs; and some data files storing important or confidential files. For example, the control circuit 110 may only perform data scrubbing upon the locations where files exist in RAIDS. Hence, under the situation where the entire RAID capacity is large but the storage space for storing file data is small, the method (e.g. the method 300) and apparatus of the present invention may reach the goal of greatly increasing the overall efficiency of the storage system. In another example, the control circuit 110 may perform data scrubbing only upon the data folder storing important or confidential files. Hence, under the situation where the overall capacity of the storage system is large but the data amount of confidential files is small, the method (e.g. the method 300) and apparatus of the present invention may reach the goal of greatly increasing the overall efficiency of the storage system.

The method and apparatus of the present invention may allow the administrator to control the data amount for performing data scrubbing (e.g. the data amount for performing data scrubbing once) via the third configuration interface setting the storage system. Since the conventional data scrubbing management scheme is usually performed upon the entire storage system, the data amount of each operation is the storage capacity of the entire storage system. In comparison, the method and apparatus of the present invention may allow the administrator to arbitrarily designate the data amount when there is a need for processing the data scrubbing mission, such as the entire storage system capacity or a designated data amount (e.g. the data amount can be 1 Terabyte (TB)). When the administrator selects to perform data scrubbing upon the entire storage system via the second configuration interface, she can also designate the data amount of each process via the third configuration interface to make each data scrubbing mission only process the designated data amount. When performing another data scrubbing mission (e.g. one or more subsequent data scrubbing missions), the end location of the last data scrubbing mission will be the initial location of the previous data scrubbing mission. Hence, the method may divide the entire data scrubbing mission into a plurality of portions to avoid the situation where one entire data scrubbing mission requires too much time to be completed, which lowers the overall system efficiency.

In addition, the method and apparatus of the present invention may allow the administrator to set the storage system via the fourth configuration interface set to control the way the data scrubbing utilizing the system resources, in order to determine to what extent a data scrubbing mission may affect the system efficiency during the data scrubbing mission. The control circuit 110 may apply a system automatically adjusting settings to determine the resource usage level of data scrubbing. More particularly, the control circuit 110 may be designed to automatically detect the busy levels of system resources, and refer to the busy levels to dynamically adjust the resource usage level of data scrubbing. This can prevent the data scrubbing mission from lowering the efficiency of other services when the system is busy, and properly utilize the system resources when the system is idle in order to raise the data scrubbing speed, thus reducing the execution time. The aforementioned resource usage level may be selected from a plurality of predetermined resource usage levels, in which examples of the plurality of predetermined resource usage level may include (but are not limited to) four levels, which are, respectively, "High", "Medium", "Low", and "Zero" (i.e. pausing the data scrubbing mission). Hence, the control circuit 110 may refer to the busy levels of the system resources to dynamically adjust the data scrubbing mission in order to adopt an appropriate resource usage level to balance the system service efficiency. The aforementioned "system busy level" may be defined by the following values: the CPU usage, memory usage, HDD usage, system procedure number, and system application connection number. For example, when the usage of a processor (e.g. a central processing unit (CPU)) exceeds 50%, the control circuit 110 may adjust the current resource usage level to low. In another example, when the usage of the processor exceeds 80%, the control circuit 110 may adjust the current resource usage level to zero (i.e. by pausing the data scrubbing mission). In another example, when the usage of the processor is lower than 30% and the usage of the HDD is lower than 20%, the control circuit 110 may adjust the current resource usage level to high. In another example, when the HDD usage exceeds 60%, the control circuit 110 may adjust the current resource usage level to be zero (i.e. by pausing the data scrubbing mission). In another example, when the application connection number of the system exceeds a predetermined application connection number threshold (e.g. 50, or any other fixed value), the control circuit 110 may adjust the current resource usage level to low. Under the situation where the administrator may utilize the fourth configuration interface to set the storage system, the method and apparatus of the present invention may allow the administrator to self-define how to adjust the resource usage level for the data scrubbing mission according to the busy levels of the system.

In the above embodiments, the data scrubbing based on the control factors may be called an event triggered and dynamically adapted data scrubbing. The control factors may allow the control circuit 110 to refer to the current software/hardware state of the system, and the location distribution of data and periods set by the administrator to enable data scrubbing, and allow the control circuit 110 to refer to the system resource usage and the preferences of the administrator to dynamically adjust the appropriate resource usage level. Hence, the control circuit 110 may immediately react corresponding to the current system state, and immediately ensure the correctness of data of the system.

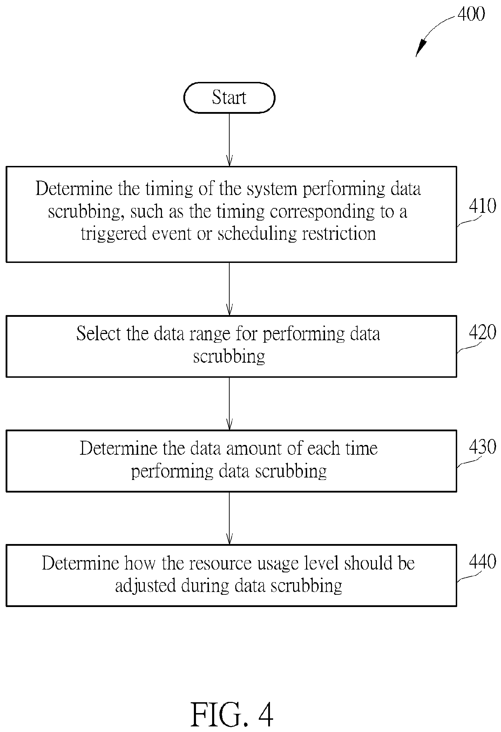

Fig. 4 shows a work flow 400 related to the method 300 shown in Fig. 3 according to an embodiment of the present invention. The work flow 400 may be applied to a system including the control circuit 110, such the storage systems 100 and 200.

In step 410, according to the settings set by the administrator via the first configuration interface, the control circuit 110 may determine the timing of the system performing data scrubbing, such as the timings corresponding to triggered events of scheduling restrictions.

In step 420, according to the settings set by the administrator via the second configuration interface, the control circuit 110 may select or determine the data range for performing data scrubbing.

In step 430, according to the settings set by the administrator via the third configuration interface, the control circuit 110 may determine the data amount of each time performing data scrubbing.

In step 440, according to the settings set by the administrator via the fourth configuration interface, the control circuit 110 may determine how the resource usage level should be adjusted during data scrubbing.

Based on the work flow 400, the control circuit 110 may allow the administrator to refer to her particular needs to create a plurality of data scrubbing missions. Further, after the administrator creates the data scrubbing missions, the control circuit 110 may refer to the settings of each of the data scrubbing missions to perform data scrubbing and associated controls. Some features in this embodiment which are similar to those in the previous embodiments/modifications are omitted here for brevity.

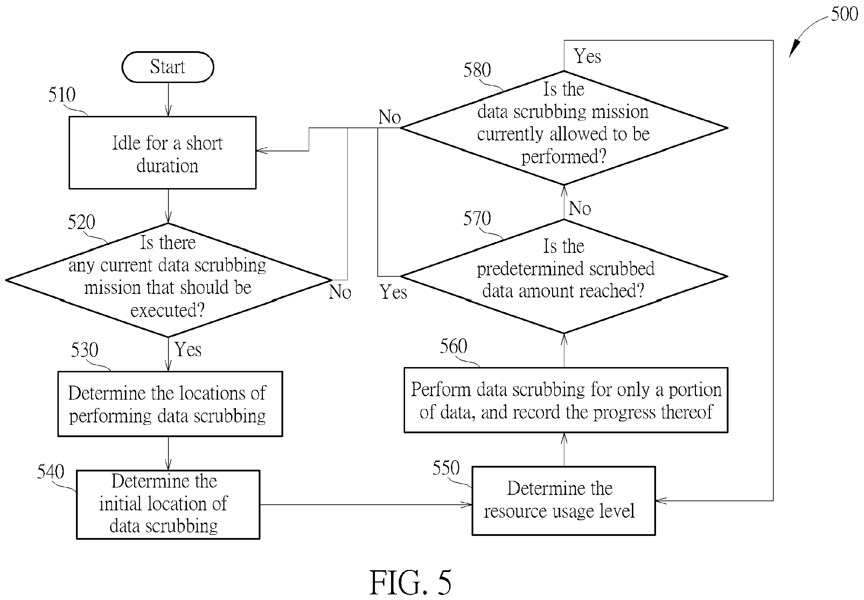

Fig. 5 shows a work flow 500 related to the method 300 shown in Fig. 3 according to another embodiment of the present invention. The work flow 500 may be applied to a system including the control circuit 110, such as the storage systems 100 and 200.

In step 510, for data scrubbing, the control circuit 110 may wait for a short period of time. For example, under the situation where the control circuit 110 currently does not need to execute any mission, the control circuit 110 may be idle for a short duration. In another example, under the situation where the control circuit 110 needs to execute one or more missions, the control circuit 110 may temporarily ignore controls of data scrubbing and execute the mission.

In step 520, the control circuit 110 may check whether there is any current data scrubbing mission that should be executed. For example, the control circuit 110 may collect the current system state and event, and refer to the system event triggered condition or period set by a user (e.g. the administrator) to determine whether there is a current data scrubbing mission to be executed. When there is a data scrubbing mission to be executed (more particularly a data scrubbing mission which should, but has not yet, been executed), the flow goes to Step 530; otherwise, the flow goes to Step 510.

In step 530, the control circuit 110 may determine the locations of performing data scrubbing. For example, the control circuit 110 may determine whether the processed range of the data scrubbing mission is the entire storage system or one or more designated file areas, in order to correspondingly determine which location needs to undergo data scrubbing.

In step 540, the control circuit 110 may determine the initial location of data scrubbing. For example, the control circuit 110 may refer to the end location of the previous data scrubbing in order to determine the initial location of the current data scrubbing mission.

In step 550, the control circuit 110 may determine or adjust the resource usage level as mentioned above. For example, the control circuit 110 may detect the current resource usages of the system, and adjust the resource usage level of the data scrubbing mission according to the configuration set by the user.

In step 560, the control circuit 110 may perform data scrubbing for only a portion of data, and record the progress thereof. For example, after the data scrubbing of the portion of data is completed, the control circuit 110 may record the end location of the portion of data.

In step 570, the control circuit 110 may check whether the predetermined scrubbed data amount is reached. For example, the control circuit 110 may determine whether the data amount of the data processed by the data scrubbing mission reaches the predetermined scrubbed data amount. When the predetermined scrubbed data amount is reached (i.e. the data scrubbing mission is completed), the flow goes to Step 510; otherwise, the flow goes to Step 580.

In step 580, the control circuit 110 may check whether the data scrubbing mission is currently allowed to be performed, e.g. the user may set the time for performing data scrubbing. When the data scrubbing mission is currently allowed to be performed, the flow goes to Step 550; otherwise, the flow goes to Step 510.

Based on the work flow 500, the control circuit 110 may refer to the current software/hardware state of the system, the location distribution of data and periods set by the administrator in order to enable data scrubbing, and allow the control circuit 110 to refer to the system resource usage and the preferences of the administrator for dynamically adjusting the appropriate resource usage level. Hence, the control circuit 110 may immediately react corresponding to the current system state, thereby immediately ensuring the correctness of data of the system, the current software/hardware state, the location distribution of data and periods set by the administrator, the distribution of data and the period for enabling data scribbling set by the administrator. In addition, the control circuit 110 may refer to the system resource usage and the preferences of the administrator to dynamically adjust an appropriate resource usage level.

Hence, the control circuit 110 is capable of immediately reacting according to the current system state, and may immediately ensure the data correctness for the system. Some features in this embodiment which are similar to those in the previous embodiments/modifications are omitted here for brevity.

The method and apparatus of the present invention may allow the administrator to flexibly create one or more data scrubbing missions. For example, in a data scrubbing mission, the administrator may designate a preferred timing for executing data scrubbing, and may set the data range and data amount for the data scrubbing mission. The method and apparatus of the present invention may greatly reduce the duration of each data scrubbing, mitigate the negative effect of data scrubbing on the system efficiency, and immediately ensure the data correctness of the storage system. Based on the control schemes of "system auto dynamically adjusting the resource usage level" and "allowing administrator to self-define how the levels of system resources should be adjusted", the method and apparatus of the present invention may refer to the system state and the preferences of the administrator to dynamically adjust the levels of a data scrubbing mission using the system resources. For example, by allowing more system resources to be used by the data scrubbing mission when the system is idle in order to perform data scrubbing more thoroughly; or allowing fewer system resources to be used by the data scrubbing mission when the system is busy in order to ensure the qualities of other services of the storage system. The method and apparatus of the present invention may refer to the system state to immediately enable data scrubbing, flexibly reduce the execution time of data scrubbing, and fully utilize the resources which have not yet been used, in order to allow the storage system to maintain both service efficiency and data reliability.

The method and apparatus of the present invention may solve the related arts issues without introducing undesired side effects. Furthermore, the method and apparatus of the present invention may effectively raise the overall efficiency without wasting system resources.

## Claims

1. A method for performing data scrubbing management in a storage system (100), the method **characterized by**:
detecting whether a system event within at least one predetermined system event occurs in order to generate a detection result; and
selectively triggering a data scrubbing operation in the storage system (100) according to the detection result.

2. The method of claim 1, **characterized in that** the step of detecting whether the system event occurs in order to generate the detection result further comprises:
detecting whether an accumulated number of times the system event occurs reaches an accumulated times threshold, in order to generate the detection result, wherein the accumulated times threshold corresponds to the system event.

3. The method of claim 1 or 2, **characterized in that** the predetermined system event comprises a plurality of predetermined system events, and the system event is one of the plurality of predetermined system events; and the step of detecting whether the system event occurs in order to generate the detection result further comprises:
detecting whether another system event within the plurality of predetermined system events occurs, in order to generate the detection result.

4. The method of claim 3, **characterized in that** the step of detecting whether another system event within the plurality of predetermined system events occurs in order to generate the detection result further comprises:
detecting whether an accumulated number of times the other system event within the plurality of predetermined system events occurs reaches another accumulated times threshold, in order to generate the detection result, wherein the other accumulated times threshold corresponds to the other system event within the plurality of predetermined system events.

5. The method of claim 1, **characterized in that** the method further comprises:
providing a user interface for setting the at least one predetermined system event; and
triggering the data scrubbing operation after detecting the occurrence of one or more predetermined system event.

6. The method of claim 1, **characterized in that** the method further comprises:
determining at least one target data location to perform the data scrubbing operation, wherein the target data location indicates a range of data processed by the data scrubbing operation.

7. The method of claim 6, **characterized in that** the step of determining the target data location to perform the data scrubbing operation further comprises:
identifying a plurality of file locations in the storage system (100), wherein the plurality of file locations correspond to a plurality of files, respectively, and the target data location comprises the plurality of file locations; and
performing the data scrubbing operation upon the plurality of file locations in the storage system (100), rather than performing the data scrubbing operation upon the entire storage system (100).

8. The method of claim 6, **characterized in that** the step of determining the target data location to perform the data scrubbing operation further comprises:
identifying at least one designated region in the storage system (100), wherein storage space of the designated region is smaller than storage space of the storage system (100), and the target data location comprises the designated region; and
performing the data scrubbing operation upon the designated region in the storage system (100), rather than performing the data scrubbing operation upon the entire storage system (100).

9. The method of claim 8, **characterized in that** the method further comprises:
providing a user interface to allow a user of the storage system (100) to set the designated region.

10. The method of claim 1 or 6, **characterized in that** the method further comprises:
detecting an accumulated data amount of data processed by the data scrubbing operation, in order to generate another detection result; and
according to the other detection result, selectively stopping the data scrubbing operation.

11. The method of claim 10, **characterized in that** the method further comprises:
when the data scrubbing operation is stopped, recording a last data location of the data scrubbing operation, wherein the last data location represents a location of last data processed by the data scrubbing operation; and
when another data scrubbing operation in the storage system (100) is triggered, utilizing a next location of the last data location as an initial location of the other data scrubbing operation.

12. The method of claim 1, **characterized in that** the method further comprises:
automatically detecting busy levels of system resources of the storage system (100), and dynamically adjusting a resource usage level of the data scrubbing operation according to the busy levels.

13. An apparatus for performing data scrubbing management in a storage system (100), the apparatus comprising at least a portion of the storage system (100), and the apparatus **characterized by**:
at least one storage device (120-1), positioned in the storage system (100), wherein the storage device (120-1) is arranged to store information; and
a control circuit (110), positioned in the storage system (100) and coupled to the storage device (120-1), the control circuit (110) arranged to control operations of the storage system (100), wherein the control circuit (110) detects whether a system event of at least one predetermined system event occurs in order to generate a detection result, wherein the control circuit (110) selectively triggers a data scrubbing operation of the storage device (120-1) in the storage system (100) according to the detection result.

14. The method of claim 1 or the apparatus of claim 13, **characterized in that** each predetermined system event within the predetermined system event is not generated via scheduling settings, and the data scrubbing operation is a non-scheduling event triggered scrubbing operation.

15. The method or the apparatus of claim 14, **characterized in that** each predetermined system event within the predetermined system event is not generated via scheduling settings corresponding to a fixed period in advance.
